# EUROPEAN PATENT APPLICATION

(11) **EP 4 592 324 A1**
(43) Date of publication of application: **30.07.2025**
(21) Application number: 23881872.8
(22) Date of filing: 25.10.2023
(51) Int. Cl.: C08F 110/14, C08F 210/14, C08F 4/70

(54) **ALPHA-OLEFIN POLYMER, PREPARATION METHOD THEREFOR AND USE THEREOF**

(30) Priority: 25.10.2022 CN 202211308644; 25.10.2022 CN 202211308376; 25.10.2022 CN 202211309110
(71) Applicant: China Petroleum & Chemical Corporation, Beijing 100728 (CN); Sinopec (Beijing) Research Institute of Chemical Industry Co., Ltd., Beijing 100013 (CN)
(72) Inventor: LAI, Jingjing, Beijing 100013 (CN); GUO, Zifang, Beijing 100013 (CN); GOU, Qingqiang, Beijing 100013 (CN); GAO, Rong, Beijing 100013 (CN); WANG, Ying, Beijing 100013 (CN); ZHANG, Randi, Beijing 100013 (CN); AN, Jingyan, Beijing 100013 (CN); YUE, Qiang, Beijing 100013 (CN); SONG, Zhihui, Beijing 100013 (CN); LI, Xinyang, Beijing 100013 (CN); GU, Yuanning, Beijing 100013 (CN)
(74) Representative: Hoffmann Eitle
(86) International application number: PCT/CN2023/126413
(87) International publication number: WO 2024/088295

(57) **Abstract**

The present invention relates to the technical field of olefin polymerization. Disclosed are an α-olefin polymer, a preparation method therefor and a use thereof. The α-olefin polymer is formed by polymerizing at least one α-olefin monomer CH₂=CHR. In the α-olefin polymer, carbon atoms located in a main chain account for 58-87% of the number of all carbon atoms, wherein R is a linear or branched alkyl group having the number of carbon atoms more than or equal to 2; the weight average molecular weight of the α-olefin polymer is 10,000-250,000; and the molecular weight distribution PDI of the α-olefin polymer is less than 3. The α-olefin polymer of the present invention has excellent thickening efficiency as a viscosity index improver for lubricating oil.

## Description

### CROSS-REFERENCE TO RELATED APPLICATIONS

The application claims the benefits of the Chinese patent application No. "202211308644.8", filed on October 25, 2022, the Chinese patent application No. "202211308376.X", filed on October 25, 2022, and the Chinese patent application No. "202211309110.7", filed on October 25, 2022, the contents of which are specifically and entirely incorporated herein by reference.

### TECHNICAL FIELD

The present invention relates to the technical field of olefin polymerization, in particular to an α-olefin polymer, a preparation method therefor and a use thereof.

### BACKGROUND ART

The lubricating oil in actual use generally requires addition of additives (e.g., a purifying dispersant, a viscosity index improver, or an antioxidant) to improve various properties of the oil product. Among them, the viscosity index improver is a very important additive.

The viscosity of lubricating oil significantly changes along with temperature variation, the viscosity increases at a low temperature, and when the temperature rises, the viscosity decreases, and the lubricating effect becomes worse; an addition of the viscosity index improver can effectively enhance the lubricating efficiency at the high temperature, thereby improving the viscosity-temperature performance of lubricating oil. Among them, the olefin copolymer-based viscosity index improver (OCP) has a suitable thickening capacity and shear stability, and a moderate price, it is one of the most widely used viscosity index improvers.

The olefin copolymer-based viscosity index improver generally uses ethylene as a main constituent monomer, but the viscosity index improver has the defects that it can hardly simultaneously balance the property requirements of the desirable thickening capacity, solubility, and the system stability at a low temperature. In order to ensure solubility of the viscosity index improver in a base oil and keep the system stable at a low temperature, an α-olefin (e.g., propylene) and ethylene are generally used for copolymerization to increase the content of branched-chain in polyolefin. However, when the proportion of α-olefin copolymerization is increased, i.e., the content of the branched-chain is augmented, the solubility and low-temperature stability are greatly improved, but the thickening capacity is significantly decreased, thus the content of branched-chain cannot be excessively high to ensure sufficient thickening efficiency, for example, when the copolymerization of ethylene and propylene is used for preparing the viscosity index improver, the propylene unit content in the polymer is generally not more than 50%. Therefore, the used amount of α-olefin as a comonomer is strictly limited in the conventional preparation method. Further, if an α-olefin, especially a long chain α-olefin, is used as the main polymerization monomer, the viscosity is generally low because of the excessively high content of the branched-chain, thus the viscosity index improver has a poor thickening efficiency.

### SUMMARY OF THE INVENTION

The present invention aims to overcome the defects in the prior art that the used amount of α-olefin is strictly limited during the process of preparing olefin copolymer-based viscosity index improver, and the thickening efficiency of an olefin polymer prepared by using α-olefin as the main polymerization monomer is poor, and provides an α-olefin polymer, a preparation method therefor and a use thereof. The α-olefin polymer according to the invention is prepared by polymerization of one kind of α-olefin or two or more α-olefins, and the α-olefin polymer has excellent thickening efficiency when used as a viscosity index improver for the lubricating oil.

In order to achieve the above objects, the first aspect of the present invention provides an α-olefin polymer formed by polymerizing at least one α-olefin monomer CH₂=CHR, it is characterized in that in the α-olefin polymer, carbon atoms located in a main chain account for 58-87% of the number of all carbon atoms, wherein R is a linear or branched alkyl group having the number of carbon atoms more than or equal to 2; the α-olefin polymer has a weight average molecular weight within the range of 10,000-250,000, preferably within the range of 25,000-150,000, more preferably within the range of 30,000-120,000; the α-olefin polymer has a molecular weight distribution PDI less than 3, preferably less than or equal to 2.

The second aspect of the invention provides a method for preparing the aforementioned α -olefin polymer, the method comprises the following steps: carrying out a polymerization reaction of α-olefin monomers having the number of carbon atoms more than or equal to 4 in the presence of a main catalyst, a cocatalyst, an optional reversible chain transfer agent, and an optional solvent, wherein the main catalyst is a post-transition metal catalyst with diimine as a ligand.

The third aspect of the invention provides a use of the aforementioned α-olefin polymer as a viscosity index improver.

The fourth aspect of the invention provides a lubricating oil comprising a base oil and the aforementioned α-olefin polymer.

Due to the technical scheme of the present invention, the α-olefin polymer exhibits a desirable thickening efficiency and has overcome the existing technical problem in the prior art that the α-olefin polymer has poor performance as a viscosity index improver resulting from the excessively high content of branched carbons in the α-olefin polymer.

Moreover, the present invention further broadens the selectable varieties of the viscosity index improver by using the α-olefin polymer as the viscosity index improver, thus the α-olefin polymer type viscosity index improver is extremely valuable from both a practical perspective and a technical study perspective.

### DESCRIPTION OF THE PREFERRED EMBODIMENT

The preferred embodiments of the invention will be described in detail below. It should be understood that the embodiments described herein are merely intended to illustrate and explain the invention, instead of imposing restrictions thereon.

The α-olefin polymer of the invention is formed by polymerizing at least one α-olefin monomer CH₂=CHR, wherein R is a linear or branched alkyl group having the number of carbon atoms more than or equal to 2, in the α-olefin polymer, carbon atoms located in a main chain account for 58-87%, preferably 60-85%, more preferably 63-82% of the number of all carbon atoms.

The α-olefin polymer comprises a first unit -(CH₂)-, a second unit -CH(CH₃)-, and a third unit -CH(R)-, the first unit is present in a number of 77% or more, and the third unit is present in a number of 18% or less, based on the total number of carbon atoms in main chain of the α-olefin polymer. In a case of preferably, the first unit is present in a number of 80-95%, the second unit is present in a number of 1-10%, and the third unit is present in a number of 2-12%, based on the total number of carbon atoms in the main chain of the α-olefin polymer. In the invention, a third unit is a unit obtained from the α-olefin monomer without "chain walking".

In the invention, the α-olefin polymer has a weight average molecular weight within the range of 10,000-250,000, preferably within the range of 25,000-150,000, more preferably within the range of 30,000-120,000.

In the invention, the α-olefin polymer has a molecular weight distribution PDI less than 3, preferably less than or equal to 2, more preferably within the range of 1.01-2.

In the invention, the weight average molecular weight Mw and molecular weight distribution PDI of the α-olefin polymer are measured by the Gel Permeation Chromatography-Infrared (GPC-IR) detector.

In some embodiments, the α-olefin polymer is obtained from a homopolymerization of one kind of α-olefin monomer, it has a weight average molecular weight within the range of 20,000-250,000 (preferably within the range of 30,000-150,000), and a molecular weight distribution PDI less than 3 (preferably less than or equal to 2).

In a more preferred embodiment, the α-olefin polymer is a diblock polymer A-B or a triblock polymer A-B-A, wherein the branching degree of block A is greater than that of block B. The α-olefin polymer prepared according to the preferred embodiment has better thickening efficiency. In the invention, the branching degree refers to the number of branched-chains contained per 1,000 carbon atoms, the branching degree is measured by the Gel Permeation Chromatography-Infrared (GPC-IR) detector.

When the α-olefin polymer is a diblock polymer or a triblock polymer, in some embodiments, the α-olefin polymer is obtained through the continuous homopolymerization process consisting of at least two stages of an α-olefin monomer. In the continuous homopolymerization process consisting of at least two stages, the diblock polymer or the triblock polymer having more than two blocks with different branching degrees is formed by controlling the reaction temperatures and/or the α-olefin monomer concentrations of the different reaction stages. In the embodiment, the α-olefin polymer has a weight average molecular weight within the range of 22,000-180,000 (preferably within the range of 32,000-160,000), and a molecular weight distribution PDI less than 3 (preferably less than or equal to 2).

When the α-olefin polymer is a diblock polymer, in other embodiments, the α-olefin polymer is obtained through the continuous homopolymerization process of two kinds of α-olefin monomers composed of two stages, wherein a kind of α-olefin monomer is used in each stage. In the embodiment, the α-olefin polymer has a weight average molecular weight within the range of 10,000-250,000 (preferably within the range of 25,000-150,000), and a molecular weight distribution PDI less than 3 (preferably less than or equal to 2).

In the invention, when the α-olefin polymer is the diblock polymer A-B or the triblock polymer A-B-A, in a case of preferably, the block A is in an amorphous form (i.e., amorphous) and the block B has a certain crystallinity by controlling the extent of the polymerization reaction in the reaction stage. In this case, the block B in the block polymer has a melting point, and block A does not have a melting point. More preferably, the melting point of the block polymer is within the range from -50°C to 80°C.

In the invention, the α-olefin monomer is a linear or branched α-olefin having 4-20 (preferably 4-12, and specifically, it may be 4, 5, 6, 7, 8, 9, 10, 11 or 12, for example) carbon atoms. In a case of preferably, the α-olefin monomer is at least one selected from the group consisting of 1-butene, 2-methyl-1-butene, 3,3-dimethyl-1-butene, 1-pentene, 1-pentene substituted with one or more methyl, ethyl, and propyl, 1-hexene, 1-hexene substituted with one or more methyl, ethyl, and propyl, 1-heptene, 1-heptene substituted with one or more methyl, ethyl, and propyl, 1-octene substituted with one or more methyl, ethyl, and propyl, 1-nonene, 1-decene, and 1-dodecene. More preferably, the α-olefin monomer is at least one selected from the group consisting of 1-butene, 2-methyl-1-butene, 3,3-dimethyl-1-butene, 1-pentene, 1-pentene substituted with one or more methyl, ethyl, and propyl, 1-hexene, 1-hexene substituted with one or more methyl, ethyl, and propyl, 1-heptene, 1-heptene substituted with one or more methyl, ethyl, and propyl, i.e., preferably an α-olefin monomer having the number of carbon atoms less than 8.

The method for preparing the α-olefin polymer according to the present invention comprises the following steps: carrying out a polymerization reaction of α-olefin monomers having the number of carbon atoms more than or equal to 4 in the presence of a main catalyst, a cocatalyst, an optional reversible chain transfer agent, and an optional solvent, wherein the main catalyst is a post-transition metal catalyst with diimine as a ligand.

According to the method for preparing the α-olefin polymer in the invention, by using a post-transition metal catalyst with diimine as a ligand, the branching degree of the α-olefin polymer can be greatly reduced, so that the prepared α-olefin polymer exhibits a desired thickening efficiency when used as a viscosity index improver for lubricating oil, its thickening efficiency is remarkably improved as compared to the conventional α-olefin polymer, breaking the proportional limit when the traditional α-olefin is used as a viscosity index improver.

In the method of the present invention, the polymerization reaction process may comprise only one reaction stage or at least two reaction stages.

In some embodiments, the polymerization reaction process comprises only one reaction stage, and only one kind of α-olefin monomer is used during the polymerization reaction process.

In other embodiments, the polymerization reaction process comprises at least two reaction stages, and the α-olefin monomer used in each reaction stage is the same. In this embodiment, the diblock polymer A-B or the triblock polymer A-B-A is formed by controlling the reaction temperatures and/or the α-olefin monomer concentrations of the different reaction stages, wherein the branching degree of the block A is greater than that of the block B.

In the above embodiments, controlling the reaction temperatures of the different reaction stages comprises: arranging that the absolute value of the difference in polymerization reaction temperatures of two adjacent reaction stages is not less than 10°C, preferably not less than 20°C.

In the above embodiments, controlling the α-olefin monomer concentrations of the different reaction stages comprises: arranging the ratio of the α-olefin monomer concentrations of two adjacent reaction stages to be greater than 3.

In other embodiments, the polymerization reaction process comprises at least two reaction stages, and the α-olefin monomers used in each reaction stage are different, i.e., the diblock polymer A-B or the triblock polymer A-B-A is formed by controlling the α-olefin monomer species of the different reaction stages, wherein the branching degree of the block A is greater than that of the block B. In the embodiments, in the two adjacent reaction stages, the number of carbon atoms of the α-olefin monomer added in the next reaction stage is preferably less than the number of carbon atoms of the α-olefin monomer added in the previous reaction stage.

In the method of the present invention, the reaction temperature of the polymerization reaction may be within the range from -40°C to 100°C, preferably within the range from 0°C to 70°C.

In the method of the present invention, the reaction time of the polymerization reaction may be within the range from 5min to 48h, preferably from 10min to 24h.

In the method of the present invention, the α-olefin monomer concentration may be 0.05mol/L or more. The α-olefin monomer concentration ranges may be different for various kinds of α-olefin monomers, for example, the concentration of α-olefin monomer having 6 carbon atoms may be 8.15mol/L or less, and the concentration of α-olefin monomer having 14 carbon atoms may be 3.9mol/L or less.

In some embodiments, the polymerization reaction process comprises two reaction stages, and the diblock polymer is formed by controlling the reaction temperatures of the different reaction stages, in particular, the reaction temperature of one reaction stage is within the range from -20°C to 30°C, preferably from 0°C to 30°C, and the corresponding reaction time is within the range from 5min to 48h, preferably from 10min to 18h; the reaction temperature of another reaction stage is within the range from 0°C to 80°C, preferably from 25°C to 55°C, and the corresponding reaction time is within the range from 5min to 24h, preferably from 5min to 4h, more preferably from 5min to 2h.

In other embodiments, the polymerization reaction process comprises at least two reaction stages, and the diblock polymer is formed by controlling the α-olefin monomer concentrations of the different reaction stages, in particular, the ratio of the α-olefin monomer concentrations of two adjacent reaction stages is greater than 3, preferably greater than 8, and in the reaction stage with a low α-olefin monomer concentration, the α-olefin monomer concentration is within the range of 0.1-2mol/L, preferably within the range of 0.2-1mol/L. Further preferably, the reaction time of the reaction stage having a lower monomer concentration in adjacent reaction stages is within the range from 30min to 18h, and the reaction time of the reaction stages having a higher monomer concentration is within the range of 3-40min.

In the present invention, the main catalyst may be selected from the conventional post-transition metal catalysts. In a preferred embodiment, the main catalyst is a metal complex represented by formula (I),

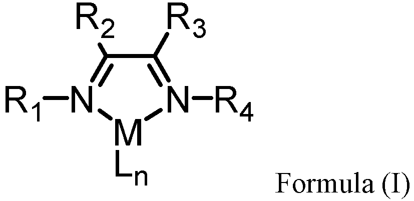

In formula (I), M is a group VIII metal. In a case of preferably, M is selected from nickel and palladium.

In Formula (I), R₁ and R₄ may be the same or different, each independently selected from C1-C30 hydrocarbyl or heterohydrocarbyl, R₁ and R₄ optionally bonded together to form a ring structure. Here, the C1-C30 hydrocarbyl may be selected from substituted or unsubstituted C1-C30 alkyl, substituted or unsubstituted C2-C30 alkenyl, substituted or unsubstituted C2-C30 alkynyl, substituted or unsubstituted C6-C30 aryl, substituted or unsubstituted C7-C30 aralkyl, and substituted or unsubstituted C7-C30 alkylaryl; the C1-C30 heterohydrocarbyl may be selected from substituted or unsubstituted C1-C30 alkoxyl, substituted or unsubstituted C2-C30 alkenoxy, and substituted or unsubstituted C2-C30 alkynoxyl.

In a case of preferably, R₁ and R₄ are each independently selected from substituted or unsubstituted C1-C20 alkyl, and substituted or unsubstituted C6-C20 aryl. Further preferably, R₁ and R₄ are each independently selected from substituted or unsubstituted C1-C10 alkyl, and substituted or unsubstituted C6-C15 aryl.

In the most preferred embodiment, R₁ and R₄ are each a group represented by formula (II),

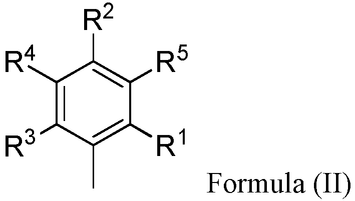

In formula (II), R¹, R², R³, R⁴, and R⁵ may be the same or different, each independently selected from hydrogen, halogen, hydroxyl, and substituted or unsubstituted C1-C30 hydrocarbyl or heterohydrocarbyl, R¹, R², R³, R⁴, and R⁵ optionally bonded together to form a ring structure. Here, the C1-C30 hydrocarbyl may be selected from substituted or unsubstituted C1-C30 alkyl, substituted or unsubstituted C2-C30 alkenyl, substituted or unsubstituted C2-C30 alkynyl, substituted or unsubstituted C6-C30 aryl, substituted or unsubstituted C7-C30 aralkyl, and substituted or unsubstituted C7-C30 alkylaryl; the C1-C30 heterohydrocarbyl may be selected from substituted or unsubstituted C1-C30 alkoxyl, substituted or unsubstituted C2-C30 alkenoxy, and substituted or unsubstituted C2-C30 alkynoxyl.

In a case of preferably, R¹ and R³ in formula (II) are each independently selected from substituted or unsubstituted C3-C10 alkyl or heterohydrocarbyl. Here, the C3-C10 alkyl may be n-propyl, isopropyl, n-butyl, isobutyl, pentyl, heptyl, octyl, and the like; and the C3-C10 heterohydrocarbyl may be selected from substituted or unsubstituted C3-C10 alkoxy, substituted or unsubstituted C3-C10 alkenoxy and substituted or unsubstituted C3-C10 alkynoxyl.

R₂ and R₃ in formula (I) may be the same or different, each independently selected from hydrogen, halogen (particularly a chlorine atom), and C1-C20 hydrocarbyl or heterohydrocarbyl, R₂ and R₃ may optionally bonded together to form a ring structure. Here, the C1-C20 hydrocarbyl may be selected from substituted or unsubstituted C1-C20 alkyl, substituted or unsubstituted C2-C20 alkenyl, substituted or unsubstituted C2-C20 alkynyl, substituted or unsubstituted C6-C20 aryl, substituted or unsubstituted C7-C20 aralkyl, and substituted or unsubstituted C7-C20 alkylaryl; the C1-C20 heterohydrocarbyl may be selected from substituted or unsubstituted C1-C20 alkoxyl, substituted or unsubstituted C2-C20 alkenoxy, and substituted or unsubstituted C2-C20 alkynoxyl.

In a case of preferably, R₂ and R₃ are each independently selected from substituted or unsubstituted C6-C20 aryl, substituted or unsubstituted C7-C20 aralkyl, and substituted or unsubstituted C7-C20 alkylaryl, or R₂ and R₃ form aralkylene after cyclizing with each other.

In formula (I), -Lₙ denotes that there are a number n of L groups attached to the metal M. The number n of L groups may be the same or different from each other, each selected from the group consisting of halogen, C1-C10 hydrocarbyl, and C1-C10 Hydrocarbon oxygen group; n is an integer satisfying the M valence state. Here, the C1-C10 hydrocarbyl may be selected from substituted or unsubstituted C1-C10 alkyl, substituted or unsubstituted C2-C10 alkenyl, substituted or unsubstituted C2-C10 alkynyl, substituted or unsubstituted C6-C10 aryl, substituted or unsubstituted C7-C10 aralkyl, and substituted or unsubstituted C7-C10 alkylaryl; the C1-C10 Hydrocarbon oxygen group may be selected from substituted or unsubstituted C1-C10 alkoxyl, substituted or unsubstituted C2-C10 alkenoxy, and substituted or unsubstituted C2-C10 alkynoxyl. The halogen herein may be selected from the group consisting of fluorine, chlorine, bromine, and iodine, most preferably bromine.

In the present invention, the alkyl may be a linear chain alkyl, a branched-chain alkyl, or a cycloalkyl. The alkoxyl may be a linear chain alkoxyl, a branched-chain alkoxyl, or a cyclo-alkoxyl.

In the present invention, the expression "substituted" in "substituted or unsubstituted" means containing a substituent, where the substituent may be selected, for example, from the group consisting of halogen, hydroxyl, C1-C6 alkyl, halogenated C1-C6 alkyl, C1-C6 alkoxyl, and halogenated C1-C6 alkoxyl.

In the present invention, the alkyl (e.g., C1-16 alkyl, C1-C20 alkyl, or C1-C30 alkyl) may be selected, for example, from the group consisting of methyl, ethyl, n-propyl, isopropyl, n-butyl, isobutyl, n-pentyl, isopentyl, n-hexyl, isohexyl, and 3,3-dimethylbutyl.

In the present invention, the alkoxyl (e.g., C1-C10 alkoxyl, C1-C20 alkoxyl, a C1-C30 alkoxyl) may be selected, for example, from the group consisting of methoxyl, ethoxyl, n-propoxyl, isopropoxyl, n-butoxyl, isobutoxyl, n-pentoxyl, isopentoxyl, n-hexoxyl, isohexoxyl, and 3,3-dimethylbutoxyl.

In the present invention, aryl (e.g., C6-C10 aryl, C6-C20 aryl, C6-C30 aryl) may be selected, for example, from the group consisting of phenyl, 4-methylphenyl, 4-ethylphenyl, dimethylphenyl, and vinylphenyl.

In the invention, the halogen is selected from the group consisting of fluorine, chlorine, bromine, and iodine.

The aforementioned post-transition metal catalysts are commercially available or can be prepared according to conventional methods in the art, the specific preparation methods can be obtained with reference to the patent applications CN111116787A, CN112745362A, CN114478868A, and the methods disclosed in the literature (Polymers 2018, 10, 2073-4360), the literature (Macromolecules 2014, 47, 3325-3331, the literature (Angew. Chem., Int. Ed. 2004, 43, 1821-1825), and the literature (J. Am. Chem. Soc. 2014, 136, 7213-7216). The relevant contents disclosed in the literature are entirely incorporated herein by reference, and the contents will not be repeatedly described herein.

In the present invention, the cocatalyst may be selected within a wide range. In a preferred embodiment of the invention, the cocatalyst is at least one selected from the group consisting of organoaluminum compounds and organoboron compounds.

In the invention, the organoaluminum compound is one or more selected from the group consisting of alkylalumoxane, alkylaluminum, and alkylaluminum halide. The specific examples of said organoaluminum compound may be at least one selected from, but not limited to, the group consisting of trimethylaluminum, triethylaluminum, tri-isobutylaluminum, tri-n-hexylaluminum, trioctylaluminum, mono-hydrodiethylaluminum, mono-hydrodiisobutylaluminum, mono-chlorodiethylaluminum, mono-chlorodiisobutylaluminum, ethylaluminum sesquichloride, dichloroethylaluminum, Methylalumoxane (MAO) and Modified Methylalumoxane (MMAO). In a preferred embodiment, the organoaluminum compound is at least one of MAO, MMAO, mono-chlorodiethylaluminum, dichloroethylaluminum, and ethylaluminum sesquichloride.

In the invention, the organoboron compound may be at least one selected from the group consisting of an aryl hydrocarbyl boron and a borate. Specific examples of the organoboron compound may be at least one selected from, but not limited to, the group consisting of tripentafluorophenyl boron, N,N-dimethylphenylammonium tetra(pentafluorophenyl) borate and tetra (pentafluorophenyl) boronic acid triphenylmethyl salt.

In the invention, the reversible chain transfer agent may be dialkylzinc. Specific examples of dialkylzinc may be at least one selected from, but not limited to, the group consisting of diethylzinc, di(n-propyl)zinc, and di(n-octyl)zinc. The thickening efficiency of the prepared α-olefin polymer may be further improved when dialkylzinc (in particular diethylzinc) is added as a reversible chain transfer agent during the reaction process.

In some preferred embodiments, when the polymerization reaction process comprises two reaction stages, and the reaction temperature and/or the α-olefin monomer concentration of the two reaction stages are different, the polymerization reaction time for each reaction stage can be appropriately adjusted according to the catalyst system in use. For example, when the cocatalyst is Methylaluminoxane (MAO), Modified Methylaluminoxane (MMAO), ethylaluminum sesquichloride, and arylboron, the reaction time is preferably within the range from 5min to 2h, more preferably from 10min to 1h, in the reaction stage with a low concentration or a low-temperature; the reaction time is preferably within the range from 3min to 1h, more preferably from 5min to 30min, in the reaction stage with a high concentration or a high-temperature. When the cocatalyst is trimethylaluminum, triethylaluminum, tri-isobutylaluminum, tri-n-hexylaluminum, trioctylaluminum, mono-hydrodiethylaluminum, mono-hydrodiisobutylaluminum, mono-chlorodiethylaluminum, mono-chlorodiisobutylaluminum, and dichloroethylaluminum, the reaction time is preferably within the range from 10min to 48h, more preferably from 30min to 18h, in the reaction stage with a low concentration or a low-temperature; the reaction time is preferably within the range of from 10min to 24h, more preferably from 20min to 2h, in the reaction stage with a high concentration or a high-temperature.

In the invention, when the cocatalyst is an organoaluminum compound, the molar ratio of aluminum in the cocatalyst to M in the main catalyst may be (10-10⁷): 1 (e.g., 10:1, 20:1, 50:1, 100:1, 200:1, 300:1, 500:1, 700:1, 800:1, 1,000:1, 2,000:1, 3,000:1, 5,000:1, 10,000:1, 100,000:1, 1,000,000:1, 10,000,000:1, and any value therebetween), preferably (10-100,000): 1, more preferably (100-10,000): 1.

In the present invention, when the cocatalyst is an organoboron compound and an organoaluminum compound, the molar ratio of boron in the cocatalyst to M in the main catalyst may be (0.1-1,000): 1 (e.g., 0.1:1, 0.2:1, 0.5:1, 1:1, 2:1, 3:1, 5:1, 8:1, 10:1, 20:1, 50:1, 100:1, 200:1, 300:1, 500:1, 700:1, 800:1, 1,000:1, and any value therebetween), preferably (0.1-500): 1. The molar ratio of organoaluminum to M in the main catalyst may be (10-10⁵): 1 (e.g., 10:1, 20:1, 50:1, 100:1, 200:1, 300:1, 400: 1, 500:1, 600:1, 700:1, 800:1, 1,000:1, 2,000:1, 3,000:1, 5,000:1, 10,000:1, 100,000:1, and any value therebetween), preferably (10-5,000): 1, more preferably (10-1,000): 1.

In the present invention, the molar dosage of the α-olefin monomer with respect to the 1 molar dosage of the main catalysis can be selected from a wide range. In a preferred embodiment, the molar dosage of the α-olefin monomer is 100-30,000 moles with respect to the 1 molar dosage of the main catalyst, the specific examples of the molar dosage of the α-olefin monomer may be 100 moles, 500 moles, 1,000 moles, 5,000 moles, 10,000 moles, 20,000 moles, or 30,000 moles.

In the present invention, the polymerization reaction may be carried out in an inert solvent, or maybe the bulk polymerization is directly conducted in an olefin without using an inert solvent. In the case that a solvent is used, the solvent is preferably at least one selected from the group consisting of unsubstituted or halogen-substituted aromatic hydrocarbons (e.g., toluene, xylene, chlorobenzene), unsubstituted or halogen-substituted C5-C20 saturated hydrocarbons (e.g., n-butane, isobutane, n-pentane, n-hexane, cyclohexane, n-heptane, octane, decane, heptane dichloromethane, 1,2-dichloroethane, 1,1,2,2-tetrachloroethane). More preferably, the solvent comprises an unsubstituted or halogen-substituted aromatic hydrocarbon, most preferably comprising at least one of toluene, xylene, and chlorobenzene.

In the invention, the additional solvent may be added, or may not be added (i.e., the solvent is used in an amount of zero). In the case of without adding an additional solvent, the added α-olefin monomer per se may act as the solvent. In the invention, the volume dosage of the solvent relative to the 1 volume dosage of the α-olefin monomer may be selected from a wide range. In a preferred embodiment, the volume dosage of the solvent is 0-200 volume, preferably 0-100 volume, more preferably 0.5-50 volume, relative to 1 volume dosage of the α-olefin monomer.

In the invention, the number of carbon atoms in the α-olefin monomer may be within the range of 4-20, preferably within the range of 4-12. The α-olefin monomer may be a linear or branched α-olefin. In a case of preferably, the α-olefin monomer is at least one selected from the group consisting of 1-butene, 2-methyl-1-butene, 3,3-dimethyl-1-butene, 1-pentene, 1-pentene substituted with one or more methyl, ethyl, and propyl, 1-hexene, 1-hexene substituted with one or more methyl, ethyl, and propyl, 1-heptene, 1-heptene substituted with one or more methyl, ethyl, and propyl, 1-octene substituted with one or more methyl, ethyl, and propyl, 1-nonene, 1-decene, and 1-dodecene. More preferably, the α-olefin monomer is at least one selected from the group consisting of 1-butene, 2-methyl-1-butene, 3,3-dimethyl-1-butene, 1-pentene, 1-pentene substituted with one or more methyl, ethyl, and propyl, 1-hexene, 1-hexene substituted with one or more methyl, ethyl, and propyl, 1-heptene, 1-heptene substituted with one or more methyl, ethyl, and propyl, i.e., preferably an α-olefin monomer having the number of carbon atoms less than 8.

In the method for preparing the α-olefin polymer according to the invention, the polymer solution obtained after the polymerization reaction may be subjected to a post-treatment. The post-treatment may be carried out with the conventional means in the art. In some embodiments, the post-treatment mode comprises: adding an ethanol-hydrochloric acid solution to the polymer solution to deactivate the active centers.

The invention also provides a use of the aforementioned α-olefin polymer as a viscosity index improver, in particular a use as a viscosity index improver for lubricating oil. When the α-olefin polymer is used as a viscosity index improver, the α-olefin polymer of the invention has a significantly higher thickening efficiency compared to the existing olefin polymer. In particular, the thickening efficiency of the α-olefin polymer in the invention is 2-15 mm²/s, preferably 3-10 mm²/s, as measured according to the method stipulated in Appendix A of the Petrochemical Industrial Standard SH/T0622-2007 in China.

The invention also provides a lubricating oil comprising a base oil and the aforementioned α-olefin polymer. In the lubricating oil, the α-olefin polymer is used as a viscosity index improver.

The content of the α-olefin polymer may be determined according to the conventional content of a viscosity index improver in the lubricating oil. In a case of preferably, the α-olefin polymer is contained in an amount of 0.01-20wt.%, more preferably 0.5-10wt.%, based on the total weight of the lubricating oil.

The method of using the α-olefin polymer in lubricating oil may be a conventional method in the art. Typically, a certain proportion of the α-olefin polymer is mixed with a base oil of the lubricating oil. The mixing temperature and the heating time are adjustable according to the specific mixing conditions, the mixing temperature is typically within the range of 110-130°C, and the stirring time is 3-4 hours.

In the invention, the base oil may be commonly used base oil of the lubricating oil in the art, and may typically be one or more of type I, type II, type III, type IV, and type V base oils in the classification of the American Petroleum Institute (API).

The α-olefin polymer according to the invention, a preparation method therefor, and a use thereof will be further described below with reference to examples. The examples, which are conducted in the light of the technical solution of the invention, illustrate the detailed embodiments and concrete operational procedures, but the protection scope of the invention is not limited to the examples described below.

Unless otherwise specified, each of the experimental methods in the examples below pertains to the conventional methods in the field. The experimental materials used in the examples below, unless otherwise specified, are commercially available.

In the following examples and comparative examples, the weight average molecular weight Mw and molecular weight distribution PDI of the olefin polymer were measured with the Gel Permeation Chromatography-Infrared (GPC-IR) detector;
The branching degree of the olefin polymer was measured with the Gel Permeation Chromatography-Infrared (GPC-IR) detector;
The content (molar percentage content) of the first unit, the second unit, and the third unit, and a percentage of carbon atoms located in a main chain relative to the number of all carbon atoms were detected and calculated based on the nuclear magnetic carbon spectrogram;
The melting point of the olefin polymer was measured with Differential Scanning Calorimetry (DSC).

The thickening efficiency of the olefin polymer when used as a viscosity index improver for lubricating oil was measured according to the method stipulated in Appendix A of the Petrochemical Industrial Standard SH/T0622-2007 in China, wherein the concentration of the polymer was 1%, the base oil in use had a kinematic viscosity of 5.8912 mm²/s at 100°C and a kinematic viscosity of 29.6238 mm²/s at 40°C.

The viscosity index of the olefin polymer when used as a viscosity index improver for lubricating oil was calculated according to the China National Standard GB/T1995-1998.

### Preparation Example 1

The complex represented by formula A was prepared with the preparation process as follows:
The p-toluene sulfonic acid was used as the catalyst, 0.87g of acenaphthequinone and 1.9mL of 2,6-diisopropylaniline were refluxed in 100mL of toluene for 24 hours, cooled to room temperature, the solvent was removed in vacuum, and the product was separated by column chromatography, the ligand L_{A} was obtained.

A solution of dichloromethane containing 0.23g of (DME)NiBr₂ was slowly and dropwise added to a solution of dichloromethane containing 0.50g of ligand L_{A}, stirred at room temperature for 6 hours, anhydrous ethyl ether was then added to generate sediment. After filtering the sediment, the filter cake was washed with anhydrous ethyl ether and dried under vacuum, the complex represented by formula A was prepared.

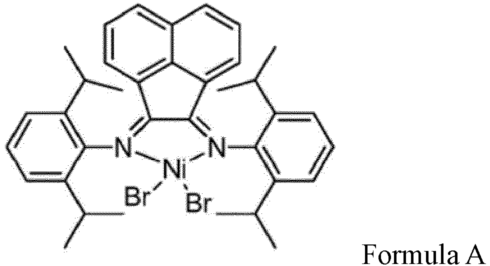

### Preparation Example 2

The complex represented by formula B was prepared with the preparation process as follows:
The p-toluene sulfonic acid was used as the catalyst, 1.14g of 9,10-dihydro-9,10-ethyleneanthracene-11,12-dione and 1.9mL of 2,6-diisopropylaniline were refluxed in 100mL of toluene for 24 hours, cooled to room temperature, the solvent was removed in vacuum, and the product was separated by column chromatography, the ligand L_{B} was obtained.

A solution of dichloromethane containing 0.23g of (DME)NiBr₂ was slowly and dropwise added to a solution of dichloromethane containing 0.45g of ligand L_{B}, stirred at room temperature for 6 hours, anhydrous ethyl ether was then added to generate sediment. After filtering the sediment, the filter cake was washed with anhydrous ethyl ether and dried under vacuum, the complex represented by formula B was prepared.

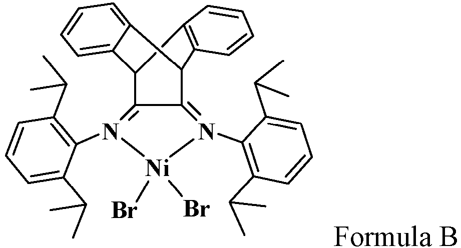

### Preparation Example 3

The complex represented by formula C was prepared with the preparation process as follows:
An ethanol solution containing 0.23g of (DME)NiBr₂ was slowly and dropwise added to a solution of dichloromethane containing 0.50g of ligand L_{A}, stirred at room temperature for 6 hours, anhydrous ethyl ether was then added to generate sediment. After filtering the sediment, the filter cake was washed with anhydrous ethyl ether and dried under vacuum, the complex represented by formula C was prepared.

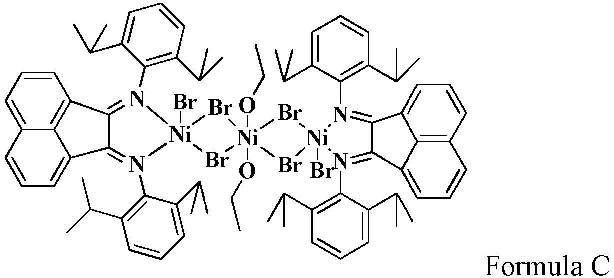

### Preparation Example 4

The complex represented by formula D was prepared with the preparation process as follows:
The p-toluene sulfonic acid was used as the catalyst, 3.0g of compound D (as shown in the following formula) and 4mL of 2,6-diisopropylaniline were refluxed in 100mL toluene for 24 hours, and the solvent was removed after filtration, the residue was dissolved with dichloromethane, and passed through the alkaline alumina column, washed and separated with petroleum ether/ethyl acetate (20:1), the solvent was removed to obtain the ligand L_{D}.

A solution of dichloromethane containing 0.50g of (DME)NiBr₂ was dropwise added to a solution of dichloromethane containing 1.05g of ligand L_{D}, stirred at room temperature for 6 hours, the sediment was separated out. After filtering the sediment, the filter cake was washed with ethyl ether and dried, the complex represented by formula D was prepared.

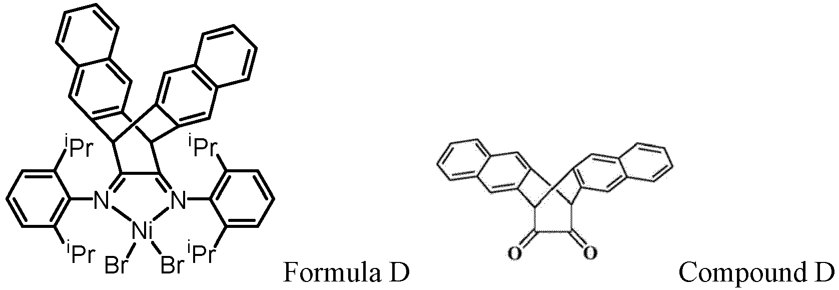

### Example 1

A reaction bottle with a volume of 250 mL was heated and dried at 100°C for 2 hours, and vacuumized when the reaction bottle was hot, nitrogen gas was introduced into the reaction kettle for replacing the air contained herein for three times, 7mg of the complex represented by formula A was added, 30mL of toluene was then added through a syringe, the complex was sufficiently stirred and dissolved, 10mL of 1-hexene was added, 1.8mL of methyl aluminoxane toluene solution having a concentration of 1.53 mol/L was further added, 2mL of diethylzinc hexane solution having a concentration of 1.0 mol/L was subsequently added, the reaction temperature was maintained at 30°C and the polymerization reaction was performed for 60 minutes, the reaction was then quenched by using the hydrochloric acid ethanol solution having a concentration of 10 vol.%, a sediment was generated by using ethanol, the sediment was washed with ethanol, then dried under vacuum and washed, the sediment was subjected to drying under vacuum to prepare the polymer product.

### Example 2

A reaction bottle with a volume of 250 mL was heated and dried at 100°C for 2 hours, and vacuumized when the reaction bottle was hot, nitrogen gas was introduced into the reaction kettle for replacing the air contained herein for three times, 7mg of the complex represented by formula A was added, 20mL of toluene was then added through a syringe, the complex was sufficiently stirred and dissolved, 20mL of 1-hexene was added, 3mL of a hexane solution of ethylaluminum sesquichloride having a concentration of 0.4 mol/L was added, 0.5mL of diethylzinc hexane solution having a concentration of 1.0 mol/L was subsequently added, the reaction temperature was maintained at 30°C and the polymerization reaction was performed for 20 minutes, the reaction was then quenched by using the hydrochloric acid ethanol solution having a concentration of 10 vol.%, a sediment was generated by using ethanol, the sediment was washed with ethanol, then dried under vacuum and washed, the sediment was subjected to drying under vacuum to prepare the polymer product.

### Example 3

A reaction bottle with a volume of 250 mL was heated and dried at 100°C for 2 hours and vacuumized when the reaction bottle was hot, nitrogen gas was introduced into the reaction kettle for replacing the air contained herein three times, 7mg of the complex represented by formula A was added, 20mL of toluene was then added, the complex was sufficiently stirred and dissolved, 7mL of 1-hexene was added, 3mL of a hexane solution of ethylaluminum sesquichloride having a concentration of 0.4 mol/L was added, the reaction temperature was maintained at 30°C and the polymerization reaction was performed for 10 minutes, the reaction was then quenched by using the hydrochloric acid ethanol solution having a concentration of 10 vol.%, sediment was generated by using ethanol, the sediment was washed with ethanol, and then subjected to drying under vacuum to prepare the polymer product.

### Example 4

A reaction bottle with a volume of 250 mL was heated and dried at 100°C for 2 hours, and vacuumized when the reaction bottle was hot, nitrogen gas was introduced into the reaction kettle for replacing the air contained herein for three times, 7mg of the complex represented by formula A was added, 30mL of dichloromethane was then added through a syringe, the complex was sufficiently stirred and dissolved, 20mL of 1-hexene was added, 2mL of a hexane solution of ethylaluminum sesquichloride having a concentration of 0.4 mol/L was added, 25mg of tri(pentafluorophenyl)borane was added, 0.2mL of a diethyl zinc hexane solution having a concentration of 1.0mol/L was subsequently added, the reaction temperature was maintained at 30°C and the polymerization reaction was performed for 10 minutes, the reaction was then quenched by using the hydrochloric acid ethanol solution having a concentration of 10 vol.%, a sediment was generated by using ethanol, the sediment was washed with ethanol, then dried under vacuum and washed, the sediment was subjected to drying under vacuum to prepare the polymer product.

### Example 5

Material A was composed of 24mg of the complex represented by formula B and 39mL of chlorobenzene; material B was composed of 30mL of 1-hexene, 6mL of methylalumoxane toluene solution having a concentration of 1.53 mol/L, and 3mL of chlorobenzene; material C was composed of 0.8mL of a diethylzinc hexane solution having a concentration of 1.0 mol/L, 30mL of 1-hexene, and 47.2mL of chlorobenzene; the material A and the material B were injected at a flow rate of 0.25mL/min into two pipelines which were sufficiently purged with nitrogen gas respectively, and blended in a T-type mixer 1 placed in an oil bath at 0°C, the blended materials A and B were immediately mixed with the material C through a T-type mixer 2 placed in an oil bath at 0°C, the material C was injected into a pipeline at a flow rate of 0.5 mL/min. The mixed solution of materials A, B, and C was then fed into a pipeline placed in an oil bath at 0°C, and the length of the pipeline was 28.7m. The reactant at the pipeline outlet was dropwise added into a hydrochloric acid ethanol solution having a concentration of 10 vol.%, a sediment was generated by using ethanol, the sediment was washed with ethanol, then dried under vacuum, and the polymer product was prepared. Each of the pipelines in use was the polytetrafluoroethylene (PTFE) pipeline having an internal diameter of 2mm.

### Example 6

A reaction bottle with a volume of 250 mL was heated and dried at 100°C for 2 hours, and vacuumized when the reaction bottle was hot, nitrogen gas was introduced into the reaction kettle for replacing the air contained herein for three times, 7mg of the complex represented by formula A was added, 15mL of toluene and 5mL of hexane were then added through a syringe, the complex was sufficiently stirred and dissolved, 11mL of 1-pentene was added, 3mL of a hexane solution of ethylaluminum sesquichloride having a concentration of 0.4 mol/L was further added, 0.5mL of diethylzinc hexane solution having a concentration of 1.0 mol/L was subsequently added, the reaction temperature was maintained at 20°C and the polymerization reaction was performed for 30 minutes, the reaction was then quenched by using the hydrochloric acid ethanol solution having a concentration of 10 vol.%, a sediment was generated by using ethanol, the sediment was washed with ethanol, the sediment was subjected to drying under vacuum to prepare the polymer product.

### Example 7

A reaction bottle with a volume of 250 mL was heated and dried at 100°C for 2 hours, and vacuumized when the reaction bottle was hot, nitrogen gas was introduced into the reaction kettle for replacing the air contained herein for three times, 7mg of the complex represented by formula A was added, 20mL of toluene was then added through a syringe, the complex was sufficiently stirred and dissolved, 13.5mL of 1-hexene was added, 3mL of a hexane solution of ethylaluminum sesquichloride having a concentration of 0.4 mol/L was further added, 0.25mL of diethylzinc hexane solution having a concentration of 1.0 mol/L was subsequently added, the reaction temperature was maintained at 50°C and the polymerization reaction was performed for 20 minutes, the reaction was then quenched by using the hydrochloric acid ethanol solution having a concentration of 10 vol.%, a sediment was generated by using ethanol, the sediment was washed with ethanol, the sediment was subjected to drying under vacuum to prepare the polymer product.

### Example 8

A reaction bottle with a volume of 250 mL was heated and dried at 100°C for 2 hours, and vacuumized when the reaction bottle was hot, nitrogen gas was introduced into the reaction kettle for replacing the air contained herein for three times, 7mg of the complex represented by formula A was added, 10mL of toluene was then added through a syringe, the complex was sufficiently stirred and dissolved, 30mL of 1-octylene was added, 5mL of a hexane solution of ethylaluminum sesquichloride having a concentration of 0.4 mol/L was further added, 0.5mL of diethylzinc hexane solution having a concentration of 1.0 mol/L was subsequently added, the reaction temperature was maintained at 50°C and the polymerization reaction was performed for 10 minutes, the reaction was then quenched by using the hydrochloric acid ethanol solution having a concentration of 10 vol.%, a sediment was generated by using ethanol, the sediment was washed with ethanol, the sediment was subjected to drying under vacuum to prepare the polymer product.

### Example 9

A reaction bottle with a volume of 250 mL was heated and dried at 100°C for 2 hours, and vacuumized when the reaction bottle was hot, nitrogen gas was introduced into the reaction kettle for replacing the air contained herein for three times, 7mg of the complex represented by formula A was added, 30mL of toluene was then added through a syringe, the complex was sufficiently stirred and dissolved, 14mL of 1-decylene was added, 2mL of methylaluminoxane toluene solution having a concentration of 1.53 mol/L was further added, 0.2mL of diethylzinc hexane solution having a concentration of 1.0 mol/L was subsequently added, the reaction temperature was maintained at 55°C and the polymerization reaction was performed for 10 minutes, the reaction was then quenched by using the hydrochloric acid ethanol solution having a concentration of 10 vol.%, a sediment was generated by using ethanol, the sediment was washed with ethanol, the sediment was subjected to drying under vacuum to prepare the polymer product.

### Example 10

The material A was composed of 22.5mL of 1-octene and 7.5mL of a hexane solution of ethylaluminum sesquichloride having a concentration of 0.4 mol/L; the material B was composed of 50mg of a complex represented by formula C, 22.5mL of toluene, and 7.5mL of 1-octene; the material C was composed of 0.5mL of a diethylzinc hexane solution having a concentration of 1.0 mol/L, 26.5mL of 1-octene, and 32mL of toluene. Material A and material B were injected at a flow rate of 0.666 mL/min into two pipelines which were sufficiently purged with nitrogen gas respectively, and blended in a T-type mixer 1 placed in an oil bath at 30°C, the blended materials A and B were immediately mixed with the material C through a T-type mixer 2 placed in an oil bath at 30°C, wherein the material C was injected into a pipeline at a flow rate of 1.333 mL/min. The mixed solution of materials A, B, and C was then fed into a pipeline T1 placed in an oil bath at 30°C, the length of pipeline T1 was 30m; the mixed solution subsequently flowed into a pipeline T2 placed in an oil bath at 55°C, the length of the pipeline T2 was 20m. The reactant at an outlet of the pipeline T2 was dropwise added into a hydrochloric acid ethanol solution having a concentration of 10 vol.%, a sediment was generated by using ethanol, the sediment was washed with ethanol, then dried under vacuum, and the polymer product was prepared. Each of the pipelines in use was the PTFE pipeline having an internal diameter of 1mm. The polymer had a branching degree of 72, and the polymer was a diblock polymer with a melting point of 55.4°C.

### Example 11

Material A was composed of 7mg of the complex represented by formula A and 15mL of toluene; material B was composed of 6.3mL of 1-decene, 3mL of a hexane solution of ethylaluminum sesquichloride having a concentration of 0.4 mol/L, and 5.7mL of toluene; material C was composed of 20mL of 1-decene. Material A and material B were injected at a flow rate of 0.268 mL/min into two pipelines which were sufficiently purged with nitrogen gas respectively, and blended in a T-type mixer 1 placed in an oil bath at 15°C, the mixed solution of materials A and B was subsequently fed into a pipeline T1 placed in an oil bath at 15°C, the length of the pipeline T1 was 20.5m; the mixed solution of materials A and B was then blended with the material C through a T-type mixer 2 placed in an oil bath at 15°C, wherein the material C was injected into a pipeline at a flow rate of 0.358 mL/min. The mixed solution of materials A, B, and C was then fed into a pipeline T2 placed in an oil bath at 15°C, the length of the pipeline T2 was 5.7m. The reactant at an outlet of the pipeline T2 was dropwise added into a hydrochloric acid ethanol solution having a concentration of 10 vol.%, a sediment was generated by using ethanol, the sediment was washed with ethanol, then dried under vacuum, and the polymer product was prepared. Each of the pipelines in use was the PTFE pipeline having an internal diameter of 1mm. The polymer had a branching degree of 61, and the polymer was a diblock polymer.

### Example 12

Material A was composed of 9mg of the complex represented by formula D and 30mL of toluene; material B was composed of 12.6mL of 1-decene, 6mL of a hexane solution of ethylaluminum sesquichloride having a concentration of 0.4 mol/L, and 11.4mL of toluene; material C was composed of 40mL of 1-hexene. Material A and material B were injected at a flow rate of 0.287 mL/min into two pipelines which were sufficiently purged with nitrogen gas respectively, and blended in a T-type mixer 1 placed in an oil bath at 15°C, the mixed solution of materials A and B was subsequently fed into a pipeline T1 placed in an oil bath at 15°C, the length of the pipeline T1 was 21.9m, and the pipeline was filled with SK-type helical mixing cores; the mixed solution of materials A and B was then blended with the material C through a T-type mixer 2 placed in an oil bath at 15°C, wherein the material C was injected into a pipeline at a flow rate of 0.383 mL/min. The mixed solution of materials A, B, and C was then fed into a pipeline T2 placed in an oil bath at 15°C, the length of the pipeline T2 was 6.1m, and the pipeline was filled with SK-type helical mixing cores; the reactant at an outlet of the pipeline T2 was dropwise added into a hydrochloric acid ethanol solution having a concentration of 10 vol.%, sediment was generated by using ethanol, the sediment was washed with ethanol, then dried under vacuum, the polymer product was prepared. Each of the pipelines in use was a stainless steel pipeline having an internal diameter of 1mm. The polymer had a branching degree of 71, and the polymer was a diblock polymer with a melting point of 45.3°C.

### Example 13

A reaction bottle with a volume of 250 mL was heated and dried at 100°C for 2 hours, and vacuumized when the reaction bottle was hot, nitrogen gas was introduced into the reaction kettle for replacing the air contained herein three times, 7mg of the complex represented by formula A was added, 20mL of toluene was then added through a syringe, the complex was sufficiently stirred and dissolved, 7.5mL of 1-hexene was added, 3mL of a hexane solution of ethylaluminum sesquichloride having a concentration of 0.4 mol/L was further added, 0.3mL of diethylzinc hexane solution having a concentration of 1.0 mol/L was subsequently added, the reaction temperature was maintained at 30°C and the polymerization reaction was performed for 30 minutes, a small amount of sample was withdrawn using a syringe, sediment was generated by adding ethanol, the obtained polymer sample was characterized, its branching degree was 110. The reaction bottle was transferred to an environment at the temperature of 55°C, and the reaction was continued for 20 min. The reaction was then quenched by using the hydrochloric acid ethanol solution having a concentration of 10 vol.%, sediment was generated by using ethanol, the sediment was washed with ethanol, an the sediment was subjected to drying under vacuum to prepare the polymer product. The polymer had a branching degree of 95, and the polymer was a diblock polymer with a melting point of -22°C.

### Example 14

A reaction bottle with a volume of 250 mL was heated and dried at 100°C for 2 hours and vacuumized when the reaction bottle was hot, nitrogen gas was introduced into the reaction kettle for replacing the air contained herein three times, 7mg of the complex represented by formula A was added, 15mL of toluene was then added through a syringe, the complex was sufficiently stirred and dissolved, 6mL of 1-hexene was added, 3mL of a methylalumoxane toluene solution having a concentration of 1.53 mol/L was further added, 0.3mL of diethylzinc hexane solution having a concentration of 1 mol/L was subsequently added, the reaction temperature was maintained at 35°C and the polymerization reaction was performed for 20 minutes, a small amount of sample was withdrawn using a syringe, sediment was generated by adding ethanol, the obtained polymer sample was characterized, the branching degree of the sample was 111. 40mL of toluene was subsequently added, and the reaction was continued for 60 min. The reaction was then quenched by using the hydrochloric acid ethanol solution having a concentration of 10 vol.%, a sediment was generated by using ethanol, the sediment was washed with ethanol, and the sediment was subjected to drying under vacuum to prepare the polymer product. The polymer had a branching degree of 86, and the polymer was a diblock polymer.

### Example 15

A reaction bottle with a volume of 250 mL was heated and dried at 100°C for 2 hours and vacuumized when the reaction bottle was hot, nitrogen gas was introduced into the reaction kettle for replacing the air contained herein three times, 7mg of the complex represented by formula A was added, 10mL of toluene was then added through a syringe, the complex was sufficiently stirred and dissolved, 10mL of 1-octene was added, 1mL of a monochlorodiethylaluminum hexane solution having a concentration of 2mol/L was further added, the reaction temperature was maintained at 25°C for carrying out the polymerization reaction for 10 min, a small amount of sample was withdrawn using a syringe, sediment was generated by adding ethanol, the obtained polymer sample was characterized, its branching degree was 74. The reaction bottle was transferred to an environment at the temperature of 50°C, and the reaction was continued for 10 min. The reaction was then quenched by using the hydrochloric acid ethanol solution having a concentration of 10 vol.%, a sediment was generated by using ethanol, the sediment was washed with ethanol, and the sediment was subjected to drying under vacuum to prepare the polymer product. The polymer had a branching degree of 64, and the polymer was a diblock polymer with a melting point of 54.4°C.

### Example 16

A reaction bottle with a volume of 250 mL was heated and dried at 100°C for 2 hours and vacuumized when the reaction bottle was hot, nitrogen gas was introduced into the reaction kettle for replacing the air contained herein three times, 7mg of the complex represented by formula A was added, 15mL of toluene was then added through a syringe, the complex was sufficiently stirred and dissolved, 6mL of 1-hexene was added, 3mL of a methylalumoxane toluene solution having a concentration of 1.53 mol/L was further added, 0.3mL of diethylzinc hexane solution having a concentration of 1 mol/L was subsequently added, the reaction temperature was maintained at 35°C and the polymerization reaction was performed for 15 minutes, 40mL of toluene was subsequently added, and the reaction was continued for 60 min; 18mL of 1-hexene was then added and the reaction was continued for 15 minutes. The reaction was then quenched by using the hydrochloric acid ethanol solution having a concentration of 10 vol.%, a sediment was generated by using ethanol, the sediment was washed with ethanol, and the sediment was subjected to drying under vacuum to prepare the polymer product. The polymer was a triblock polymer.

### Comparative Example 1

A reaction bottle with a volume of 100 mL was heated and dried at 100°C for 2 hours and vacuumized when the reaction bottle was hot, nitrogen gas was introduced into the reaction kettle for replacing the air contained herein three times, 10mg of the metallocene catalyst Ph₂C(Cp)(Flu)ZrCl₂ (commercially available from APAC Pharmaceutical) was added, 15mL of 1-hexene and 2mL of a methylalumoxane toluene solution having a concentration of 1.53 mol/L were then added through a syringe, the reaction was carried out at 25°C for 1 hour, the reaction was then quenched by using the hydrochloric acid ethanol solution having a concentration of 10 vol.%, a sediment was generated by using ethanol, the sediment was washed with ethanol, the sediment was subjected to drying under vacuum to prepare the polymer product.

### Comparative Example 2

A reaction bottle with a volume of 100 mL was heated and dried at 100°C for 2 hours and vacuumized when the reaction bottle was hot, nitrogen gas was introduced into the reaction kettle for replacing the air contained herein three times, 10mg of the metallocene catalyst Ph₂C(Cp)(Flu)ZrCl₂ was added, 15mL of 1-hexene and 2mL of a methylalumoxane toluene solution having a concentration of 1.53 mol/L were then added through a syringe, the reaction was carried out at 25°C for 2 hours, the reaction was then quenched by using the hydrochloric acid ethanol solution having a concentration of 10 vol.%, sediment was generated by using ethanol, the sediment was washed with ethanol, the sediment was subjected to drying under vacuum to prepare the polymer product.

### Comparative Example 3

A reaction bottle with a volume of 100 mL was heated and dried at 100°C for 2 hours and vacuumized when the reaction bottle was hot, nitrogen gas was introduced into the reaction kettle for replacing the air contained herein three times, 10mg of the metallocene catalyst Ph₂C(Cp)(Flu)ZrCl₂ was added, 15mL of 1-hexene and 2mL of a methylalumoxane toluene solution having a concentration of 1.53 mol/L were then added through a syringe, the reaction was carried out at 25°C for 1 hour, the temperature was raised to 55°C, and the reaction was continued for 1 hour, the reaction was then quenched by using the hydrochloric acid ethanol solution having a concentration of 10 vol.%, sediment was generated by using ethanol, the sediment was washed with ethanol, the sediment was subjected to drying under vacuum to prepare the polymer product.

### Comparative Example 4

A reaction bottle with a volume of 100 mL was heated and dried at 100°C for 2 hours and vacuumized when the reaction bottle was hot, nitrogen gas was introduced into the reaction kettle for replacing the air contained herein three times, 10mg of the metallocene catalyst Ph₂C(Cp)(Flu)ZrCl₂ was added, 15mL of 1-hexene and 2mL of a methylalumoxane toluene solution having a concentration of 1.53 mol/L were then added through a syringe, the reaction was carried out at 25°C for 1 hour, 5mL of 1-decene was added, the reaction was continued for 1 hour, the reaction was then quenched by using the hydrochloric acid ethanol solution having a concentration of 10 vol.%, sediment was generated by using ethanol, the sediment was washed with ethanol, the sediment was subjected to drying under vacuum to prepare the polymer product.

### Comparative Example 5

A reaction bottle with a volume of 250 mL was heated and dried at 100°C for 2 hours, and vacuumized when the reaction bottle was hot, nitrogen gas was introduced into the reaction kettle for replacing the air contained herein three times, 7mg of the complex represented by formula A was added, 30mL of toluene was further added through a syringe, the materials were sufficiently stirred and dissolved, 10mL of 1-hexene was added, 2.8mL of a methylalumoxane toluene solution having a concentration of 1.53 mol/L were further added, the reaction temperature was maintained at -10°C for carrying out the polymerization reaction for 40min, the reaction was then quenched by using the hydrochloric acid ethanol solution having a concentration of 10 vol.%, sediment was generated by using ethanol, the sediment was washed with ethanol, the sediment was subjected to drying under vacuum to prepare the polymer product.

### Use Examples 1-16 and Use Comparative Examples 1-5

The olefin polymers prepared in the above Examples and Comparative Examples were added to a base oil 150SN of the lubricating oil respectively, stirred at 120°C for about 2 hours till the olefin polymer was completely dissolved, the thickening efficiency was then measured, the results were as shown in Table 1 below.

**Table 1**

| | First unit | Second unit | Third unit | Percentage of carbon atoms on the main chain | Weight average molecular weight | PDI | Thickening efficiency (mm²/s) | Viscosity index |
|---|---|---|---|---|---|---|---|---|
| Example 1 | 79.6% | 6.5% | 8.2% | 61.4% | 69900 | 1.90 | 4.51 | 165 |
| Example 2 | 84.6% | 4.6% | 6.5% | 66.8% | 56300 | 1.90 | 4.78 | 167 |
| Example 3 | 84.3% | 3.6% | 7.9% | 65.7% | 66900 | 1.38 | 3.85 | 167 |
| Example 4 | 83.9% | 3.3% | 8.1% | 64.6% | 79300 | 1.43 | 5.11 | 168 |
| Example 5 | 88.4% | 5.5% | 4.2% | 80.0% | 68500 | 1.77 | 4.55 | 161 |
| Example 6 | 81.1% | 6.6% | 6.7% | 66.1% | 58400 | 1.76 | 4.48 | 160 |
| Example 7 | 87.4% | 7.1% | 3.5% | 76.7% | 61800 | 1.83 | 4.55 | 164 |
| Example 8 | 92.2% | 4.7% | 2.4% | 81.4% | 110700 | 1.78 | 7.08 | 161 |
| Example 9 | 89.7% | 4.4% | 3.4% | 66.0% | 71200 | 1.65 | 4.45 | 171 |
| Example 10 | 88.7% | 4.7% | 4.5% | 69.3% | 46500 | 2.21 | 3.95 | 162 |
| Example 11 | 91.2% | 1.7% | 4.4% | 63.1% | 66200 | 1.72 | 4.29 | 169 |
| Example 12 | 89.4% | 6.1% | 3.0% | 79.2% | 85400 | 1.98 | 5.56 | 165 |
| Example 13 | 87.5% | 6.6% | 3.7% | 75.6% | 40500 | 1.74 | 3.49 | 163 |
| Example 14 | 88.8% | 5.6% | 3.7% | 77.2% | 74400 | 1.89 | 4.96 | 171 |
| Example 15 | 91.2% | 2.9% | 4.0% | 80.7% | 95800 | 2.01 | 6.05 | 173 |
| Example 16 | 88.6% | 6.1% | 3.7% | 76.7% | 92500 | 2.41 | 6.11 | 175 |
| Comparative Example 1 | 50% | 0.0% | 50% | 33.3% | 41900 | 10.00 | 0.90 | 150 |
| Comparative Example 2 | 50% | 0.0% | 50% | 33.3% | 41900 | 10.00 | 0.90 | 150 |
| Comparative Example 3 | 50% | 0.0% | 50% | 33.3% | 36700 | 12.38 | 0.77 | 149 |
| Comparative Example 4 | 50% | 0.0% | 50% | 30.0% | 44800 | 11.42 | 1.01 | 151 |
| Comparative Example 5 | 71.1% | 4.0% | 22.8% | 48.3% | 64300 | 1.40 | 2.69 | 160 |

As can be seen from the results of Table 1, the α-olefin polymer of the invention has excellent thickening efficiency as a viscosity index improver for lubricating oil.

The above content describes in detail the preferred embodiments of the present disclosure, but the present disclosure is not limited thereto. A variety of simple modifications can be made in regard to the technical solutions of the present disclosure within the scope of the technical concept of the present disclosure, including a combination of individual technical features in any other suitable manner, such simple modifications and combinations thereof shall also be regarded as the content disclosed by the present disclosure, each of them falls into the protection scope of the present disclosure.

## Claims

1. An α-olefin polymer formed by polymerizing at least one α-olefin monomer CH₂=CHR, is **characterized in that** in the α-olefin polymer, carbon atoms located in a main chain account for 58-87% of the number of all carbon atoms, wherein R is a linear or branched alkyl group having the number of carbon atoms more than or equal to 2;
the α-olefin polymer has a weight average molecular weight within the range of 10,000-250,000, preferably within the range of 25,000-150,000, more preferably within the range of 30,000-120,000;
the α-olefin polymer has a molecular weight distribution PDI less than 3, preferably less than or equal to 2.

2. The α-olefin polymer according to claim 1, wherein the α-olefin polymer comprises a first unit -(CH₂)-, a second unit -CH(CH₃)-, and a third unit -CH(R)-, the first unit is present in a number of 77% or more, and the third unit is present in a number of 18% or less, based on the total number of carbon atoms in main chain of the α-olefin polymer.

3. The α-olefin polymer according to claim 1 or 2, wherein the carbon atoms located in a main chain account for 63-82% of the number of all carbon atoms.

4. The α-olefin polymer according to claim 3, wherein the first unit is present in a number of 80-95%, the second unit is present in a number of 1-10%, and the third unit is present in a number of 2-12%, based on the total number of carbon atoms in the main chain of the α-olefin polymer.

5. The α-olefin polymer according to any one of claims 1-4, it is **characterized in that** the α-olefin polymer is a diblock polymer A-B or a triblock polymer A-B-A, wherein the branching degree of the block A is greater than that of the block B.

6. The α-olefin polymer according to any one of claims 1-5, wherein the α-olefin monomer is a linear or branched α-olefin having 4-20 carbon atoms;
preferably, the α-olefin monomer is at least one selected from the group consisting of 1-butene, 2-methyl-1-butene, 3,3-dimethyl-1-butene, 1-pentene, 1-pentene substituted with one or more methyl, ethyl, and propyl, 1-hexene, 1-hexene substituted with one or more methyl, ethyl, and propyl, 1-heptene, 1-heptene substituted with one or more methyl, ethyl, and propyl, 1-octene substituted with one or more methyl, ethyl, and propyl, 1-nonene, 1-decene, and 1-dodecene.

7. A method for preparing the α-olefin polymer according to claim 1, it is **characterized in that** the method comprises the following steps: carrying out a polymerization reaction of α-olefin monomers having the number of carbon atoms more than or equal to 4 in the presence of a main catalyst, a cocatalyst, an optional reversible chain transfer agent, and an optional solvent, wherein the main catalyst is a post-transition metal catalyst with diimine as a ligand.

8. The method according to claim 7, wherein the polymerization reaction process comprises at least two reaction stages.

9. The method according to claim 8, wherein the diblock polymer A-B or the triblock polymer A-B-A is formed by controlling the reaction temperatures and/or the α-olefin monomer concentrations of the different reaction stages, wherein the branching degree of the block A is greater than that of the block B;
preferably, controlling the reaction temperatures of the different reaction stages comprises: arranging that the absolute value of the difference in polymerization reaction temperatures of two adjacent reaction stages is not less than 10°C, preferably not less than 20°C;
preferably, controlling the α-olefin monomer concentrations of the different reaction stages comprises: arranging the ratio of the α-olefin monomer concentrations of two adjacent reaction stages to be greater than 3.

10. The method according to claim 8, wherein the diblock polymer A-B or the triblock polymer A-B-A is formed by controlling the α-olefin monomer species of the different reaction stages, wherein the branching degree of the block A is greater than that of the block B;
preferably, in the two adjacent reaction stages, the number of carbon atoms of the α-olefin monomer added in the next reaction stage is less than the number of carbon atoms of the α-olefin monomer added in the previous reaction stage.

11. The method according to any one of claims 7-10, wherein the reaction temperature of the polymerization reaction is within the range from -40°C to 100°C, preferably within the range from 0°C to 70°C, and the α-olefin monomer concentration is 0.05mol/L or more.

12. The method according to any one of claims 7-11, wherein the main catalyst is a metal complex represented by formula (I), 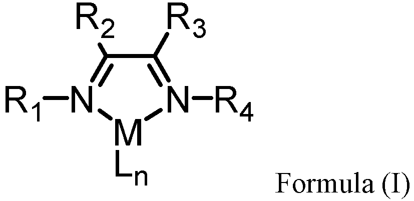
Wherein M is a group VIII metal; R₁ and R₄, which are the same or different, each independently selected from C1-C30 hydrocarbyl or heterohydrocarbyl, R₁ and R₄ optionally bonded together to form a ring structure; R₂ and R₃, which are the same or different, each independently selected from hydrogen, halogen, and C1-C20 hydrocarbyl or heterohydrocarbyl, R₂ and R₃ optionally bonded together to form a ring structure; there are number n of the group L, which are the same or different, each selected from halogen, C1-C10 hydrocarbyl, and C1-C10 Hydrocarbon oxygen group; n is an integer satisfying the M valence state;
preferably, M is selected from nickel and palladium;
preferably, R₁ and R₄ are each independently selected from substituted or unsubstituted C1-C20 alkyl, and substituted or unsubstituted C6-C20 aryl; more preferably, R₁ and R₄ are each a group represented by formula (II), 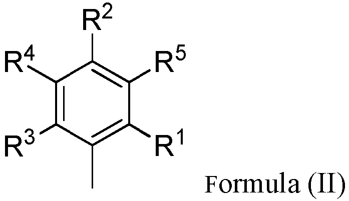
R¹, R², R³, R⁴, and R⁵ in formula (II) are the same or different, each independently selected from hydrogen, halogen, hydroxyl, and substituted or unsubstituted C1-C30 hydrocarbyl or heterohydrocarbyl, R¹, R², R³, R⁴, and R⁵ optionally bonded together to form a ring structure; more preferably, R¹ and R³ in formula (II) are each independently selected from substituted or unsubstituted C3-C10 alkyl or heterohydrocarbyl.

13. The method according to any one of claims 7-12, wherein the cocatalyst is at least one selected from the group consisting of organoaluminum compounds and organoboron compounds;
preferably, the organoaluminum compound is one or more selected from the group consisting of alkylalumoxane, alkylaluminum, and alkylaluminum halide;
preferably, the organoboron compound is at least one selected from the group consisting of an aryl hydrocarbyl boron and a borate.

14. The method according to claim 7, wherein the reversible chain transfer agent is dialkylzinc;
preferably, the dialkylzinc is at least one selected from the group consisting of diethylzinc, di(n-propyl)zinc, and di(n-octyl)zinc.

15. The method according to any of claims 7-14, wherein when the cocatalyst is an organoaluminum compound, the molar ratio of aluminum in the cocatalyst to M in the main catalyst is (10-10⁷): 1, preferably (10-100,000): 1, more preferably (100-10,000): 1;
when the cocatalyst is an organoboron compound and an organoaluminum compound, the molar ratio of boron in the cocatalyst to M in the main catalyst is (0.1-1,000): 1, preferably (0.1-500): 1; and the molar ratio of organoaluminum to M in the main catalyst is (10-10⁵): 1, preferably (10-5,000): 1, more preferably (10-1,000): 1;
preferably, the molar dosage of the α-olefin monomer is 100-30,000 moles with respect to the 1 molar dosage of the main catalyst;
preferably, the volume dosage of the solvent is 0-200 volume, more preferably 0-100 volume, further preferably 0.5-50 volume, relative to 1 volume dosage of the α-olefin monomer.

16. The method according to any one of claims 7-15, wherein the solvent is at least one selected from the group consisting of unsubstituted or halogen-substituted aromatic hydrocarbons and unsubstituted or halogen-substituted C5-C20 saturated hydrocarbons, preferably containing unsubstituted or halogen-substituted aromatic hydrocarbons, more preferably containing at least one of toluene, xylene, and chlorobenzene.

17. The method according to any one of claims 7-16, wherein the number of carbon atoms in the α-olefin monomer is within the range of 4-20, preferably within the range of 4-12;
preferably, the α-olefin monomer is a linear or branched α-olefin;
more preferably, the α-olefin monomer is selected from the group consisting of 1-butene, 2-methyl-1-butene, 3,3-dimethyl-1-butene, 1-pentene, 1-pentene substituted with one or more methyl, ethyl, and propyl, 1-hexene, 1-hexene substituted with one or more methyl, ethyl, and propyl, 1-heptene, 1-heptene substituted with one or more methyl, ethyl, and propyl, 1-octene substituted with one or more methyl, ethyl, and propyl, 1-nonene, 1-decene, and 1-dodecene.

18. A use of the α-olefin polymer according to any one of claims 1-6 as a viscosity index improver.

19. A lubricating oil comprising a base oil and the α-olefin polymer according to any one of claims 1-6;
preferably, the α-olefin polymer is contained in an amount of 0.01-20wt.%, more preferably 0.5-10wt.%, based on the total weight of the lubricating oil.

## Amended claims

### Amended claims under Art. 19.1 PCT

1. An α-olefin polymer formed by polymerizing at least one α-olefin monomer CH₂=CHR, is **characterized in that** in the α-olefin polymer, carbon atoms located in a main chain account for 58-87% of the number of all carbon atoms, wherein R is a linear or branched alkyl group having the number of carbon atoms more than or equal to 2;
the α-olefin polymer has a weight average molecular weight within the range of 10,000-250,000, preferably within the range of 25,000-150,000, more preferably within the range of 30,000-120,000;
the α-olefin polymer has a molecular weight distribution PDI less than 3, preferably less than or equal to 2;
the α-olefin polymer is a diblock polymer A-B or a triblock polymer A-B-A, wherein the branching degree of the block A is greater than that of the block B.

2. The α-olefin polymer according to claim 1, wherein the α-olefin polymer comprises a first unit -(CH₂)-, a second unit -CH(CH₃)-, and a third unit -CH(R)-, the first unit is present in a number of 77% or more, and the third unit is present in a number of 18% or less, based on the total number of carbon atoms in main chain of the α-olefin polymer.

3. The α-olefin polymer according to claim 1 or 2, wherein the carbon atoms located in a main chain account for 63-82% of the number of all carbon atoms.

4. The α-olefin polymer according to claim 3, wherein the first unit is present in a number of 80-95%, the second unit is present in a number of 1-10%, and the third unit is present in a number of 2-12%, based on the total number of carbon atoms in the main chain of the α-olefin polymer.

5. The α-olefin polymer according to any one of claims 1-4, wherein the α-olefin monomer is a linear or branched α-olefin having 4-20 carbon atoms;
preferably, the α-olefin monomer is at least one selected from the group consisting of 1-butene, 2-methyl-1-butene, 3,3-dimethyl-1-butene, 1-pentene, 1-pentene substituted with one or more methyl, ethyl, and propyl, 1-hexene, 1-hexene substituted with one or more methyl, ethyl, and propyl, 1-heptene, 1-heptene substituted with one or more methyl, ethyl, and propyl, 1-octene substituted with one or more methyl, ethyl, and propyl, 1-nonene, 1-decene, and 1-dodecene.

6. A method for preparing the α-olefin polymer according to claim 1, it is **characterized in that** the method comprises the following steps: carrying out a polymerization reaction of α-olefin monomers having the number of carbon atoms more than or equal to 4 in the presence of a main catalyst, a cocatalyst, an optional reversible chain transfer agent, and an optional solvent, wherein the main catalyst is a post-transition metal catalyst with diimine as a ligand;
the polymerization reaction process comprises at least two reaction stages, the diblock polymer A-B or the triblock polymer A-B-A is formed by controlling the reaction temperatures and/or the α-olefin monomer concentrations of the different reaction stages, or the diblock polymer A-B or the triblock polymer A-B-A is formed by controlling the α-olefin monomer species of the different reaction stages.

7. The method according to claim 6, wherein controlling the reaction temperatures of the different reaction stages comprises: arranging that the absolute value of the difference in polymerization reaction temperatures of two adjacent reaction stages is not less than 10°C, preferably not less than 20°C.

8. The method according to claim 6, wherein controlling the α-olefin monomer concentrations of the different reaction stages comprises: arranging the ratio of the α-olefin monomer concentrations of two adjacent reaction stages to be greater than 3.

9. The method according to claim 8, wherein controlling the α-olefin monomer species of the different reaction stages comprises: in the two adjacent reaction stages, the number of carbon atoms of the α-olefin monomer added in the next reaction stage is less than the number of carbon atoms of the α-olefin monomer added in the previous reaction stage.

10. The method according to any one of claims 6-9, wherein the reaction temperature of the polymerization reaction is within the range from -40°C to 100°C, preferably within the range from 0°C to 70°C, and the α-olefin monomer concentration is 0.05mol/L or more.

11. The method according to any one of claims 6-10, wherein the main catalyst is a metal complex represented by formula (I), 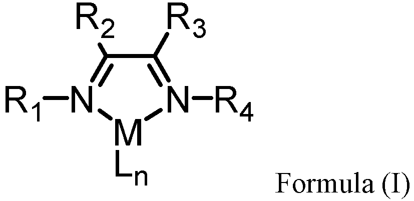
Wherein M is a group VIII metal; R₁ and R₄, which are the same or different, each independently selected from C1-C30 hydrocarbyl or heterohydrocarbyl, R₁ and R₄ optionally bonded together to form a ring structure; R₂ and R₃, which are the same or different, each independently selected from hydrogen, halogen, and C1-C20 hydrocarbyl or heterohydrocarbyl, R₂ and R₃ optionally bonded together to form a ring structure; there are number n of the group L, which are the same or different, each selected from halogen, C1-C10 hydrocarbyl, and C1-C10 Hydrocarbon oxygen group; n is an integer satisfying the M valence state;
preferably, M is selected from nickel and palladium;
preferably, R₁ and R₄ are each independently selected from substituted or unsubstituted C1-C20 alkyl, and substituted or unsubstituted C6-C20 aryl; more preferably, R₁ and R₄ are each a group represented by formula (II), 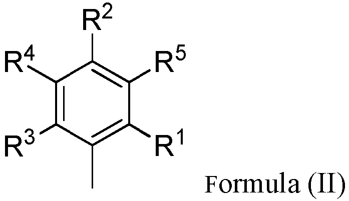
R¹, R², R³, R⁴, and R⁵ in formula (II) are the same or different, each independently selected from hydrogen, halogen, hydroxyl, and substituted or unsubstituted C1-C30 hydrocarbyl or heterohydrocarbyl, R¹, R², R³, R⁴, and R⁵ optionally bonded together to form a ring structure; more preferably, R¹ and R³ in formula (II) are each independently selected from substituted or unsubstituted C3-C10 alkyl or heterohydrocarbyl.

12. The method according to any one of claims 6-11, wherein the cocatalyst is at least one selected from the group consisting of organoaluminum compounds and organoboron compounds;
preferably, the organoaluminum compound is one or more selected from the group consisting of alkylalumoxane, alkylaluminum, and alkylaluminum halide;
preferably, the organoboron compound is at least one selected from the group consisting of an aryl hydrocarbyl boron and a borate.

13. The method according to claim 6, wherein the reversible chain transfer agent is dialkylzinc;
preferably, the dialkylzinc is at least one selected from the group consisting of diethylzinc, di(n-propyl)zinc, and di(n-octyl)zinc.

14. The method according to any of claims 6-13, wherein when the cocatalyst is an organoaluminum compound, the molar ratio of aluminum in the cocatalyst to M in the main catalyst is (10-10⁷): 1, preferably (10-100,000): 1, more preferably (100-10,000): 1;
when the cocatalyst is an organoboron compound and an organoaluminum compound, the molar ratio of boron in the cocatalyst to M in the main catalyst is (0.1-1,000): 1, preferably (0.1-500): 1; and the molar ratio of organoaluminum to M in the main catalyst is (10-10⁵): 1, preferably (10-5,000): 1, more preferably (10-1,000): 1;
preferably, the molar dosage of the α-olefin monomer is 100-30,000 moles with respect to the 1 molar dosage of the main catalyst;
preferably, the volume dosage of the solvent is 0-200 volume, more preferably 0-100 volume, further preferably 0.5-50 volume, relative to 1 volume dosage of the α-olefin monomer.

15. The method according to any one of claims 6-14, wherein the solvent is at least one selected from the group consisting of unsubstituted or halogen-substituted aromatic hydrocarbons and unsubstituted or halogen-substituted C5-C20 saturated hydrocarbons, preferably containing unsubstituted or halogen-substituted aromatic hydrocarbons, more preferably containing at least one of toluene, xylene, and chlorobenzene.

16. The method according to any one of claims 6-15, wherein the number of carbon atoms in the α-olefin monomer is within the range of 4-20, preferably within the range of 4-12;
preferably, the α-olefin monomer is a linear or branched α-olefin;
more preferably, the α-olefin monomer is selected from the group consisting of 1-butene, 2-methyl-1-butene, 3,3-dimethyl-1-butene, 1-pentene, 1-pentene substituted with one or more methyl, ethyl, and propyl, 1-hexene, 1-hexene substituted with one or more methyl, ethyl, and propyl, 1-heptene, 1-heptene substituted with one or more methyl, ethyl, and propyl, 1-octene substituted with one or more methyl, ethyl, and propyl, 1-nonene, 1-decene, and 1-dodecene.

17. A use of the α-olefin polymer according to any one of claims 1-5 as a viscosity index improver.

18. A lubricating oil comprising a base oil and the α-olefin polymer according to any one of claims 1-5;
preferably, the α-olefin polymer is contained in an amount of 0.01-20wt.%, more preferably 0.5-10wt.%, based on the total weight of the lubricating oil.
